# EUROPÄISCHE PATENTSCHRIFT

(11) **EP 3 891 017 B1**
(45) Veröffentlichungstag und Bekanntmachung des Hinweises auf die Patenterteilung: **30.08.2023**
(21) Anmeldenummer: 19827628.9
(22) Anmeldetag: 04.12.2019
(51) Int. Cl.: B60Q 5/00, B60R 21/203, B62D 1/04

(54) **HUPEINRICHTUNG FÜR EIN LENKRAD, LENKRAD MIT EINER DERARTIGEN HUPEINRICHTUNG SOWIE HERSTELLUNGSVERFAHREN**
HORN FOR A STEERING WHEEL, STEERING WHEEL HAVING A HORN OF THIS TYPE, AND PRODUCTION METHOD
DISPOSITIF DE KLAXON POUR UN VOLANT DE DIRECTION, VOLANT DE DIRECTION COMPRENANT UN TEL DISPOSITIF DE KLAXON AINSI QUE PROCÉDÉ DE FABRICATION

(30) Priorität: 07.12.2018 DE 102018131324
(43) Veröffentlichungstag der Anmeldung: 13.10.2021
(73) Patentinhaber: Dalphi Metal España, S.A., 36213 Vigo (ES)
(72) Erfinder: GRAÑA MENDUÍÑA, Joaquín, 36209 Vigo (ES)
(74) Vertreter: ZF Patentabteilung - DIPS
(86) Internationale Anmeldenummer: PCT/EP2019/083596
(87) Internationale Veröffentlichungsnummer: WO 2020/115094

(56) Entgegenhaltungen:
- WO-A2-2017/214214
- DE-C- 809 765
- DE-U1- 20 213 908
- DE-U1-202004 000 953
- US-A1- 2006 016 613

## Beschreibung

Die Erfindung betrifft ein Lenkrad gemäß dem Oberbegriff des Anspruchs 1 mit einer Hupeinrichtung sowie ein geeignetes Verfahren zur Herstellung eines solchen Lenkrads.

Eine Hupeinrichtung für ein Lenkrad ist beispielsweise aus EP 0 975 058 B1 bekannt. Diese Hupeinrichtung umfasst ein erstes sowie ein zweites Kontaktelement, wobei die Kontaktelemente als Drähte ausgebildet sind. Diese Drähte sind in einem Käfig gehalten, der Bereiche umfasst, in denen die Kontaktelemente in einem definierten Abstand zueinander gehalten werden. Weiterhin weist der Käfig Bereiche auf, in denen das erste Kontaktelement zumindest abstandsweise elastisch auslenkbar ist und im ausgelenkten Zustand das zweite Kontaktelement berührt. Auf diese Weise kann ein Hupstromkreis geschlossen werden.

Bekannte Hupeinrichtungen, die in einem separaten Käfig gelagert werden, müssen bei der Herstellung des Lenkrads aufwändig montiert werden. Die verschiedenen Bauteile der Hupeinrichtung müssen an das Lenkrad, insbesondere an das Lenkradskelett, oder an ein Gassackmodul montiert werden. Übliche Verbindungsmethoden sind dabei Schweißen, Nieten oder Verschrauben. Derartige Befestigungsmethoden weisen jedoch zum einen den Nachteil auf, dass es sich dabei um relativ langwierige Produktionsschritte handelt. Außerdem werden die Stücklistenkosten aufgrund der Verwendung von Käfigen, Schrauben, Niete etc. erhöht.

Weitere Montagemethoden, wie z. B. das Verwenden von Befestigungsclips können jedoch nicht angewandt werden, da diese Befestigungsmethoden nicht dazu geeignet sind, Toleranzen bei der Fertigung eines Lenkrades zu überbrücken.

Ein weiterer Nachteil bislang bekannter Hupeinrichtungen besteht darin, dass diese oftmals nicht für die neue Generation von Lenkrädern geeignet sind. Aufgrund von immer geringeren Abmessungen der Zentralbereiche neuerer Lenkradskelette nimmt der zur Verfügung stehende Platz hinsichtlich der Montagemöglichkeit einer Hupeinrichtung ab.

Die WO 2017/214214 A2 offenbart ein Fahrergassackmodul, in dessen Modulgehäuse eine Hupeinrichtung integriert ist, wobei die Hupeinrichtung zwei leitfähige Drähte umfasst. Die beiden Drähte sind im Ausgangszustand voneinander beabstandet, können jedoch bei Beaufschlagung einer Modulkappe miteinander in Kontakt kommen, um ein Hupsignal auszulösen.

Die DE 20 2004 000 953 U1 offenbart ein Fahrzeuglenkrad, wobei ein Hupkontaktschalter des Lenkrads zwei elektrische Kontaktdrähte aufweist, welche mittels einer Relativbewegung von zwei Bauteilen in Berührung gebracht werden können, um eine Fahrzeughupe zu betätigen. Gemäß einer Ausführungsvariante sind die Kontaktdrähte dabei abschnittsweise in einen Schaumkörper des Lenkrads eingeschäumt.

US2006016613 A1 offenbart ein Lenkrad mit einem ringförmigen Haltegriff, einem Innenteil der innerhalb des Haltegriffes einen mittleren Bereich des Lenkrades, welcher zur Aufnahme eines Gassackmoduls ausgebildet ist, ringförmig umgibt, sowie einer Hupeinrichtung für das Lenkrad, umfassend ein erstes Kontaktelement und ein zweites Kontaktelement, die voneinander beabstandet angeordnet sind, wobei die Hupeinrichtung in dem Innenteil fixiert ist. Die Kontaktelemente sind jeweils als Kontaktblech ausgebildet und durch einen Rahmen mit dem Lenkrad verbunden. Das erste Kontaktelement weist eine Kontaktfahne auf und das zweite Kontaktelement weist eine Auflagefahne auf, wobei die Kontaktfahne und die Auflagefahne derart komplementär zueinander ausgebildet und positioniert sind, dass die Kontaktfahne zum Schließen eines Hupstromkreises die Auflagefahne berührt.

Die Aufgabe der vorliegenden Erfindung ist es, ein weiterentwickeltes Lenkrad sowie ein Verfahren zur Herstellung eines solchen Lenkrads anzugeben. Insbesondere soll der für die Hupeinrichtung notwendige Platzbedarf im Zusammenhang mit dem zur Verfügung gestellten Lenkrad minimiert werden. Des Weiteren soll die Hupeinrichtung mit möglichst wenig, insbesondere keinen, zusätzlichen Bauteilen montierbar sein.

Erfindungsgemäß wird diese Aufgabe im Hinblick auf das Lenkrad durch den Gegenstand des Patentanspruches 1 und im Hinblick auf das Verfahren zur Herstellung eines solchen Lenkrads durch den Gegenstand des Patentanspruches 11 gelöst.

Vorteilhafte und zweckmäßige Ausgestaltungen des erfindungsgemäßen Lenkrads sowie des erfindungsgemäßen Verfahrens zur Herstellung eines Lenkrads sind in den Unteransprüchen angegeben.

Die Erfindung beruht auf dem Gedanken, eine Hupeinrichtung für ein Lenkrad mit einem ersten Kontaktelement und mindestens einem zweiten Kontaktelement anzugeben, wobei die beiden Kontaktelemente voneinander beabstandet angeordnet sind.

Insbesondere sind die Kontaktelemente käfigfrei in einem Schaumkörper des Lenkrades fixierbar.

Indem die Kontaktelemente käfigfrei in einem Schaumkörper des Lenkrades fixierbar sind, bedarf es für die beiden Kontaktelemente kein zusätzliches Element, mittels dessen die Kontaktelemente zueinander positioniert werden müssten, oder das zu ihrer Befestigung am Schaumkörper erforderlich wäre. Hierdurch wird Montagezeit und -aufwand eingespart.

Gemäß einer bevorzugten Ausführungsform der Erfindung ist vorgesehen, dass die Kontaktelemente jeweils einzeln und ohne Kontakt zu dem/den übrigen Kontaktelement(en), im Schaumkörper des Lenkrades verankert bzw. verankerbar sind.

Erfindungsgemäß weist das erste Kontaktelement mindestens eine Kontaktfahne und das zweite Kontaktelement mindestens eine Auflagefahne auf. Die Kontaktfahne und die Auflagefahne sind derart komplementär zueinander ausgebildet und positioniert, dass die Kontaktfahne zum Schließen eines Hupstromkreises die Auflagefahne berührt.

Bei Schließen eines Hupstromkreises erfolgt das Auslösen eines Hupsignals. Der Hupstromkreis kann einen Tonerzeuger umfassen, der ein Tonsignal, insbesondere ein Hupsignal, an einen Lautsprecher oder eine andere Signaltonabgabeeinrichtung überträgt.

Auch aufgrund dieser Ausbildung der Hupeinrichtung, nämlich durch Ausbilden mindestens einer Kontaktfahne und einer zu dieser Kontaktfahne zugehörigen Auflagefahne, kann zum einen auf die Verwendung eines Befestigungskäfigs verzichtet werden. Zum anderen ist die Hupeinrichtung derart robust ausgebildet, als dass der Hupstromkreis zuverlässig geschlossen werden kann.

Erfindungsgemäß sind die beiden Kontaktelemente als Kontaktbleche und nicht als Kontaktdrähte ausgebildet. Als Kontaktdraht ist ein derartiges Kontaktelement zu verstehen, das eine drahtförmige Form aufweist. Insbesondere weist ein derartiges Kontaktelement im Wesentlichen einen runden Querschnitt auf. Als Kontaktblech ist hingegen ein derartiges Kontaktelement zu verstehen, das aus einem Bandblech gebildet ist. Der Querschnitt eines derartigen Bandblechs ist relativ gering und insbesondere rechteckig ausgebildet.

Das erste Kontaktelement und das zweite Kontaktelement weist jeweils mindestens einen Verankerungsstift auf. Vorzugsweise weisen das erste Kontaktelement und das zweite Kontaktelement jeweils mehrere Verankerungsstifte auf. In einer besonders bevorzugten Ausführungsform der Erfindung weist das erste Kontaktelement drei Verankerungsstifte auf, wobei das zweite Kontaktelement ebenfalls drei Verankerungsstifte aufweist.

Der mindestens eine Verankerungsstift des ersten und/oder des zweiten Kontaktelements kann eine widerhakenartige Spitze aufweisen und/oder eine harpunenartige Form aufweisen. Im Allgemeinen kann der Verankerungsstift des ersten Kontaktelements und/oder des zweiten Kontaktelements widerhakenähnlich strukturiert sein. Auf diese Weise wird eine besonders gute Fixierung des ersten Kontaktelements und/oder des zweiten Kontaktelements in einem Schaumkörper des Lenkrads erreicht.

Insbesondere ist mindestens ein Verankerungsstift derart ausgebildet, dass dieser einen länglichen Zentralabschnitt aufweist, wobei mehrere Verrastungselemente seitlich am länglichen Zentralabschnitt ausgebildet sind. Die Verrastungselemente stehen mit anderen Worten seitlich vom länglichen Zentralabschnitt ab. Vorzugsweise sind die Verrastungselemente, die insbesondere als Verrastungshaken ausgebildet sind, schräg zu einer Längsebene des länglichen Zentralabschnitts ausgebildet. Die Längsebene wird in Längsrichtung des länglichen Zentralabschnittes und von der seitlichen Senkrechte hierzu aufgespannt.

Die Verrastungselemente sind entweder paarweise schräg zur Längsebene ausgebildet oder jeweils versetzt zueinander. Es ist möglich, dass zwei Verrastungselemente auf gleicher Höhe des länglichen Zentralabschnittes ausgebildet sind. Diese Verrastungselemente bilden ein Verrastungselement-Paar. Dieses Verrastungselement-Paar kann in gleicher schräg verlaufender Richtung zur Längsebene ausgebildet sein oder in entgegengesetzter Richtung. Eine derartige Struktur, die insbesondere als widerhakenähnliche Struktur bezeichnet werden kann, ermöglicht eine besonders gute Fixierung des Verankerungsstiftes in einem Schaumkörper.

Der mindestens eine Verankerungsstift des ersten Kontaktelements und der mindestens eine Verankerungsstift des zweiten Kontaktelements sind vorzugsweise in einem gleichen Abschnitt ausgebildet.

Die mindestens eine Kontaktfahne weist vorzugsweise einen gebogenen Federabschnitt auf. Der gebogene Federabschnitt ist vorzugsweise derart ausgebildet, dass eine Biegung in Richtung der komplementär zur Kontaktfahne ausgebildeten Auflagefahne ausgebildet ist. Ein derartig gebogener Federabschnitt erleichtert die Kontaktierung der Kontaktfahne mit der Auflagefahne. Sofern das erste Kontaktelement, nämlich die Kontaktfahne, betätigt wird, wird der gebogene Federabschnitt in Richtung der Auflagefahne bewegt.

Aufgrund des gebogenen Federabschnitts kann der Abstand zwischen der Kontaktfahne und der Auflagefahne im betätigten Zustand der Hupeinrichtung überwunden werden, so dass ein elektrischer Kontakt zwischen der Kontaktfahne und der Auflagefahne hergestellt wird.

Aufgrund der Ausbildung des gebogenen Federabschnitts kann die Kontaktfahne nach der Betätigung der Hupeinrichtung, d.h. nach Erzeugen des Hupsignals, selbsttätig in ihre Ausgangslage zurückversetzt werden.

Die Kontaktfahne weist insbesondere eine derartige Rückstellkraft auf, dass sich die Kontaktfahne selbsttätig in eine von der Auflagefahne beabstandete Position zurückstellt. Die Verformung bzw. Auslenkung der Kontaktfahne wird bei nachlassendem äußeren Krafteinfluss reduziert, so dass die Kontaktfahne wieder ihren ursprünglichen Ruhezustand einnimmt.

Dies erleichtert die Betätigung der Hupeinrichtung, da lediglich zur Herstellung einer elektrischen Verbindung zwischen der Kontaktfahne und der Auflagefahne und somit zum Erzeugen eines Hupsignals eine aktive Betätigung erfolgen muss. Das Hupsignal endet, sobald die Betätigungskraft nachlässt und die Rückstellkraft wirksam wir, so dass sich die beiden Fahnen voneinander beabstanden. Die Rückstellkraft kann aufgrund spezieller Ausbildung des Materials und/oder der Geometrie der mindestens einen Kontaktfahne gebildet werden bzw. ist durch das Material und/oder die Form einstellbar.

Als Kontaktfahne ist insbesondere ein derartiges Bauteil zu verstehen, das dem Grunde nach eine Plättchenform aufweist. Dieses Plättchen kann zusätzlich strukturiert und/oder gebogen sein. Vorzugsweise steht die Kontaktfahne winklig von einer Blech- bzw. Bandblechform oder von einer Drahtform ab. In einer bevorzugten Ausführungsform der Erfindung steht die Kontaktfahne im Wesentlichen senkrecht von einer Blechform oder Drahtform ab.

Als Auflagefahne ist insbesondere ein derartiges Bauteil zu verstehen, das im Wesentlichen eine Plättchenform aufweist. Dieses Plättchen kann zusätzlich strukturiert und/oder gebogen sein. Die Auflagefahne steht im Wesentlichen winklig von einer Blechform, insbesondere einer Bandblechform, oder einer Drahtform ab.

In einer besonders bevorzugten Ausführungsform der Erfindung sind das erste Kontaktelement sowie das zweite Kontaktelement als Kontaktblechband ausgebildet, wobei die Kontaktfahne(n) und Auflagefahne(n) als von diesem Kontaktblechband abgewinkelte Plättchenformen ausgebildet sind. Vorzugsweise ist das erste Kontaktelement und/oder das zweite Kontaktelement einteilig ausgebildet. Die Kontaktfahne(n) und Auflagefahne(n) werden beim Herstellungsprozess von einem Grundkörper der Kontaktelemente abgebogen.

In einer besonders bevorzugten Ausführungsform der Erfindung weisen das erste Kontaktelement und das zweite Kontaktelement im Wesentlichen jeweils eine U-Form auf. An allen drei Schenkel der U-Form ist vorzugsweise jeweils mindestens eine Kontaktfahne oder eine Auflagefahne ausgebildet. Mit anderen Worten weist das erste Kontaktelement im Wesentlichen eine U-Form auf, wobei an allen drei Schenkeln der U-Form jeweils mindestens eine Kontaktfahne ausgebildet ist. Das zweite Kontaktelement weist vorzugsweise ebenfalls eine U-Form auf, wobei an allen drei Schenkeln der U-Form jeweils mindestens eine Auflagefahne ausgebildet ist.

Bei Ausbilden des ersten sowie des zweiten Kontaktelements mit einer im Wesentlichen U-Form, ist die Kontaktfahne sowie die Auflagefahne am Verbindungsschenkel der jeweiligen U-Form im Wesentlichen mittig positioniert bzw. ausgebildet. Vorzugsweise sind in diesem Bereich auch jeweils Verankerungsstifte, nämlich mindestens ein Verankerungsstift des ersten Kontaktelements und mindestens ein Verankerungsstift des zweiten Kontaktelements ausgebildet.

An den beiden seitlichen Schenkeln der U-Form ist vorzugsweise in einem oberen Abschnitt, d.h. in einem vom Verbindungsschenkel wegweisenden Abschnitt des Schenkels die Kontaktfahne sowie die Auflagefahne ausgebildet. Vorzugsweise sind in diesem Bereich auch Verankerungsstifte ausgebildet, nämlich ein Verankerungsstift des ersten Kontaktelements sowie ein weiterer Verankerungsstift des zweiten Kontaktelements.

Aufgrund der Ausbildung des ersten Kontaktelements sowie des zweiten Kontaktelements mit einer U-Form kann der in einem Lenkradskelett zur Verfügung gestellte Bauraum bestmöglich ausgenutzt werden. Vorzugsweise sind die Kontaktfahnen und die komplementär dazu ausgebildeten Auflagefahnen in derartigen Abschnitten des Lenkrads ausgebildet, die ein zuverlässiges Auslösen eines Hupsignals ermöglichen. Bei einer Draufsicht auf ein Lenkrad wird die Hupe mittig, unten bzw. seitlich betätigt. Eine Betätigung der Hupe in einem oberen Abschnitt des Lenkrads, insbesondere der Lenkrad-Abdeckung, wird von Autofahrern standardmäßig nicht vorgenommen, so dass in diesem Bereich keine Kontaktfahne bzw. Auflagefahne ausgebildet sein muss.

Erfindungsgemäß weist das Lenkrad also einen, insbesondere ringförmigen, Haltegriff und einen Schaumkörper auf, der innerhalb des Haltegriffes einen mittleren Bereich des Lenkrades, welcher zur Aufnahme eines Gassackmoduls ausgebildet ist, ring- oder ringsegmentförmig umgibt.

In diesem Schaumkörper ist die zuvor näher beschriebene Hupeinrichtung fixiert.

Gemäß einer bevorzugten Ausführungsform weist der Schaumkörper zumindest zwei ring- oder ringsegmentförmige Ausnehmungen auf, in den das oder die Kontaktelemente fixiert ist bzw. fixierbar sind, wobei, vorzugsweise, zwei zueinander parallel verlaufende Ausnehmungen in dem Schaumkörper ausgebildet sind.

Der Schaumkörper weist, gemäß einer weiter bevorzugten Ausführung zumindest eine weitere, insbesondere zwei weitere Ausnehmungen in einem Bereich auf, in der das oder die Kontaktelemente einer Kontaktfahne bzw. einer Auflagefahne aufweisen, wobei die weitere(n) Ausnehmung(en) zur Aufnahme und Positionierung der zumindest einen Positioniereinrichtung vorgesehen und ausgebildet sind, und wobei, weiter vorzugsweise, die weitere(n) Ausnehmung(en) als kreissegmentförmige Verbreiterung der Ausnehmung ausgebildet ist bzw. sind. Die Anordnung der Hupeinrichtung direkt im Schaumkörper des Lenkrads ist besonders platzsparend. Dadurch wird ermöglicht, Gassackmodule einzusetzen, die ein relativ großes Innenraumvolumen aufweisen. Außerdem ist der Wartungsaufwand bei einem erfindungsgemäßen Lenkrad reduziert, da bei einem Defekt der Hupeinrichtung das Gassackmodul nicht demontiert werden muss.

Aufgrund der erfindungsgemäßen Ausbildung des Lenkrads wird der bereits zur Verfügung gestellte Bauraum effektiv ausgenutzt.

Außerdem ist auf Grundlage der erfindungsgemäßen Ausbildung des Lenkrads keine komplexe Verbindungsgeometrie im Lenkrad bezüglich des Gassackmoduls notwendig.

Vorzugsweise sind (die) Verankerungsstifte der Hupeinrichtung fest in dem Schaumkörper des Lenkrads eingebettet. Die Verankerungsstifte können derart ausgestaltet sein, dass eine sichere Fixierung der Hupeinrichtung im Schaumkörper erreicht wird.

Zur Verbiegung der Kontaktfahne ist vorzugsweise eine Betätigungseinrichtung ausgebildet, die wenigstens einen in Richtung der Auflagefahne vorstehenden Vorsprung aufweist. Bei der Verbiegung der Kontaktfahne kann es sich auch um eine Änderung der Position der Kontaktfahne handeln. Der Vorsprung der Betätigungseinrichtung ist vorzugsweise derart positioniert, dass die Kontaktfahne des ersten Kontaktelements derart verformt oder verbogen oder bewegt wird, dass die Kontaktfahne die Auflagefahne zum Schließen eines Hupstromkreises berührt.

In einer Ausführungsform der Erfindung kann ein Gassackmodul als Betätigungseinrichtung ausgebildet sein, wobei an dem Gassackmodul der beschriebene Vorsprung ausgebildet ist. Vorzugsweise ist der Vorsprung an einem Außengehäuseabschnitt des Gassackmoduls ausgebildet. Sofern die Betätigungseinrichtung als Teil des Gassackmoduls ausgebildet ist, trägt dies weiter zu einer verbesserten Raumausnutzung am Lenkrad bei, da keine separaten Bauteile notwendig sind, um eine Betätigungseinrichtung auszubilden.

Gemäß der Erfindung weist der Schaumkörper des Lenkrads Ausnehmungen auf, wobei das erste Kontaktelement sowie das zweite Kontaktelement in den Ausnehmungen positioniert sind. Bei den Ausnehmungen handelt es sich erfindungsgemäß um schlitzförmige Ausnehmungen.

Die Ausnehmungen weisen insbesondere eine derartige Tiefe auf, dass die als Kontaktbleche ausgebildeten Kontaktelemente mindestens überwiegend, vorzugsweise vollständig, in den Ausnehmungen positioniert sind.

Die Ausnehmungen können als Materialentfernungen ausgebildet sein. Dies bedeutet, dass der Schaumkörper zunächst monolithisch ausgebildet ist und anschließend die Ausnehmungen durch Materialabtragungsvorgänge vom Schaumkörper entfernt werden. Des Weiteren ist es möglich, dass der Schaumkörper bereits mit den Materialausnehmungen, die auch als Aussparungen bezeichnet werden können, hergestellt wird. Diesbezüglich ist eine spezielle Werkzeugform zur Herstellung des Schaumkörpers notwendig.

Vorzugsweise weist der Schaumkörper zwei voneinander beabstandet angeordnete Ausnehmungen auf, wobei in eine erste Ausnehmung das erste Kontaktelement positioniert wird und in eine zweite Ausnehmung das zweite Kontaktelement. Das zwischen den Ausnehmungen befindliche Material des Schaumkörpers dient als elektrisch isolierender Trennsteg. Mit anderen Worten sind die mindestens zwei Aussparungen durch einen Trennsteg voneinander getrennt. Der Trennsteg ist vorzugsweise aus dem Material des Schaumkörpers gebildet.

Vorzugsweise weist in einem Abschnitt des Schaumkörpers, in dem eine Auflagefahne positioniert ist, einen Freiraum auf, derart, dass die Kontaktfahne in einem unbetätigten Zustand der Hupeinrichtung von der Auflagefahne beabstandet positioniert ist. Die Auflagefahne kann im Freiraum positioniert sein, wobei die Auflagefahne auf einem Abschnitt des Schaumkörpers aufliegt. Zwischen der Kontaktfahne und der Auflagefahne ist demnach kein Schaummaterial ausgebildet.

Der Schaumkörper des Lenkrads ist vorzugsweise derart ausgebildet, dass zusätzlich in dem Abschnitt des Schaumkörpers, in dem die Kontaktfahne positioniert ist, ein/der Freiraum ausgebildet ist. Vorzugsweise ist der Freiraum des Schaumkörpers derart dimensioniert und ausgebildet, dass in dem Freiraum sowohl die Auflagefahne als auch die Kontaktfahne positioniert ist, wobei der benötigte Bewegungsumfang der Kontaktfahne zur Kontaktierung der Auflagefahne die Höhe des Freiraums definiert.

Schließlich beruht die Erfindung auf dem Gedanken, ein Verfahren zur Herstellung eines zuvor beschriebenen Lenkrads anzugeben, wobei das Verfahren die folgenden Schritte umfasst:
a) Bereitstellen eines Lenkradskeletts;
b) Umschäumen des Lenkradskeletts zur Bildung des Schaumkörpers sowie gleichzeitiges oder nachträgliches Einbringen von Ausnehmungen in den Schaumkörper, wobei die Ausnehmungen als schlitzförmige Materialaussparungen ausgebildet sind;
c) Bereitstellen der Hupeinrichtung;
d) Positionieren der Hupeinrichtung in den Ausnehmungen.

Aufgrund der erfindungsgemäßen Ausbildung des Lenkrads werden im Bereich des Lenkrads zur Herstellung einer Hupeinrichtung keine Kabelbäume notwendig.

Die Schritte a) und c) können sowohl in umgekehrter Reihenfolge als auch gleichzeitig durchgeführt werden. Das heißt, dass es nicht erfindungswesentlich ist, ob zunächst das Lenkradskelett oder die Hupeinrichtung bereitgestellt wird.

Beim Einbringen von Ausnehmungen in den Schaumkörper, können die Ausnehmungen mittels Schneid- und/oder Stanzvorgängen in den Schaumkörper eingebracht werden. Insbesondere ist es möglich, mittels eines Laserschneidverfahrens derartige Ausnehmungen präzise in den Schaumkörper einzubringen.

Des Weiteren ist es möglich, dass die Ausnehmungen bereits beim Schäumungsvorgang in den Schaumkörper eingebracht werden. In diesem Fall weist bereits die Werkzeugform zur Durchführung des Umschäumungsvorganges die Ausnehmungen auf.

Im Schritt d) werden insbesondere (die) Verankerungsstifte der Hupeinrichtung in den Schaumkörper eingedrückt.

Das erfindungsgemäße Verfahren zur Herstellung eines Lenkrades ist insbesondere im Zusammenhang mit der Befestigung der Hupeinrichtung ohne weitere Hilfsmittel und Werkzeuge durchführbar. Somit kann der Produktionsablauf beschleunigt werden, was wirtschaftliche Vorteile hat. Außerdem wird die Herstellung des Lenkrades insofern vereinfacht, als dass aufgrund der im Schaumkörper ausgebildeten Ausnehmungen bereits die Positioniervorgaben hinsichtlich der einzubringenden Hupeinrichtung vorliegen. Es entfällt somit eine aufwändige Ausrichtung der Hupeinrichtung, insbesondere der Kontaktelemente.

Die Erfindung wird im Folgenden anhand eines Ausführungsbeispiels unter Bezugnahme auf die beigefügten, schematischen Zeichnungen näher erläutert. Darin zeigen:
Fig. 1a eine perspektivische Ansicht einer Hupeinrichtung eines erfindungsgemäßen Lenkrads nach einem bevorzugten Ausführungsbeispiel;
Fig. 1b eine vergrößerte Darstellung hinsichtlich der Positionierung einer Kontaktfahne sowie einer Auflagefahne zueinander;
Fig. 1c eine vergrößerte Darstellung eines Verankerungsstifts;
Fig. 2a eine Darstellung hinsichtlich der in einen Schaumkörper eingebrachten Ausnehmungen;
Fig. 2b eine Darstellung hinsichtlich einer in ein erfindungsgemäßes Lenkrad eingebrachten Hupeinrichtung;
Fig. 2c eine vergrößerte Darstellung einer Kontaktfahne sowie einer Auflagefahne im eingebauten Zustand; und
Fig. 3 eine Darstellung hinsichtlich der Betätigung einer Kontaktfahne.

Im Folgenden werden für gleiche und gleichwirkende Teile dieselben Bezugsziffern verwendet.

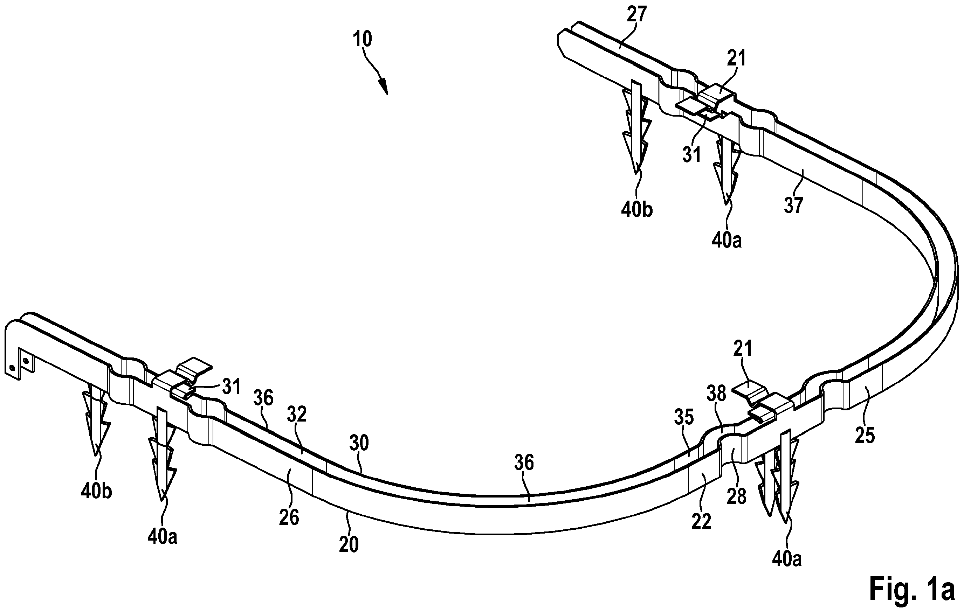

Fig. 1a zeigt in einer perspektivischen Darstellung eine mögliche Ausführungsform hinsichtlich einer erfindungsgemäßen Hupeinrichtung 10. Die Hupeinrichtung 10 umfasst ein erstes Kontaktelement 20 sowie ein zweites Kontaktelement 30. Die Kontaktelemente 20 und 30 sind im Wesentlichen als Kontaktblechbänder ausgebildet.

Das erste Kontaktelement 20 bildet das äußere Kontaktelement, wohingegen das zweite Kontaktelement 30 das innere Kontaktelement bildet. Es ist zu erkennen, dass die Kontaktelemente 20 und 30 voneinander beabstandet ausgebildet sind.

Das erste Kontaktelement 20 weist im Wesentlichen eine U-Form auf. Der Grundkörper 22 des ersten Kontaktelements 20 umfasst demnach einen Verbindungsschenkel 25, einen linken Seitenschenkel 26 sowie einen rechten Seitenschenkel 27.

Das zweite Kontaktelement 30 weist ebenfalls im Wesentlichen eine U-Form auf. Der Grundkörper 32 des zweiten Kontaktelements 30 umfasst somit einen Verbindungsschenkel 35 einen linken Seitenschenkel 36 sowie einen rechten Seitenschenkel 37.

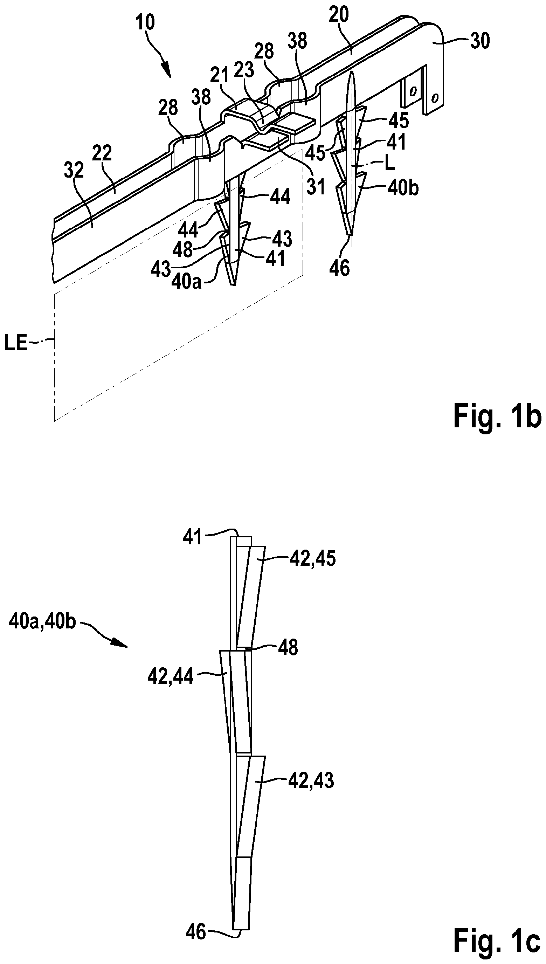

Des Weiteren ist zu erkennen, dass das erste Kontaktelement 20 Verankerungsstifte 40a aufweist. Das zweite Kontaktelement 30 weist hingegen Verankerungsstifte 40b auf. Das erste Kontaktelement 20 weist außerdem drei Kontaktfahnen 21 auf. Das zweite Kontaktelement 30 weist drei Auflagefahnen 31 auf. Eine detaillierte Darstellung hinsichtlich der komplementären Anordnung und Positionierung der Kontaktfahnen 21 und Auflagefahnen 31 zueinander ist in Fig. 1b dargestellt.

Fig. 1a zeigt, dass die Kontaktfahnen 21, die Auflagefahnen 31 sowie die Verankerungsstifte 40a und 40b an den jeweils drei Schenkeln 25, 35 sowie 26, 36 und 27, 37 jeweils in etwa im gleichen Bereich angeordnet sind. Im Bereich der Verbindungsschenkel 25 und 35 ist eine Anordnung der Fahnen 21 und 31 sowie der Verankerungsstifte 40a und 40b in einem mittigen Bereich vorgesehen. Im Bereich der linken Seitenschenkel 26, 36 ist die Anordnung der Fahnen 21, 31 sowie der Verankerungsstifte 40a, 40b in einem oberen Abschnitt vorgesehen, wobei der obere Abschnitt den Abschnitt der linken Seitenschenkel 26, 36 betrifft, die vom Verbindungsschenkel 25, 35 wegweisen. Gleiches trifft im Zusammenhang mit den rechten Seitenschenkeln 27, 37 zu. Auch hier ist eine Anordnung der Fahnen 21, 31 sowie der Verankerungsstifte 40a und 40b in einem oberen Abschnitt der Schenkel vorgesehen.

Die dargestellte Positionierung der Kontaktfahnen 21, 22 ermöglicht eine zuverlässige Erzeugung eines Hupsignals. Die Betätigung einer Hupenabdeckung am Lenkrad wird aufgrund der drei positionierten Kontaktfahnen-Paare an einer 9-Uhr-Position, 6-Uhr-Position sowie 3-Uhr-Position am Lenkrad zuverlässig erzeugt. Gleichzeitig verbleiben das erste Kontaktelement 20 sowie das zweite Kontaktelement 30 aufgrund der Anordnung der Verankerungsstifte 40a und 40b im Bereich der Kontaktfahnen 21, 31 in ihren Positionen, so dass hier kein unbeabsichtigtes Lösen der Kontaktelemente 20 und 30 erfolgt.

In Fig. 1b ist die Ausbildung der Kontaktfahnen 21 und 31 zueinander in einer vergrößerten Darstellung gezeigt. Die Kontaktfahne 21 des ersten Kontaktelements 20 steht dabei im Wesentlichen senkrecht von dem Grundkörper 22 ab. Der Grundkörper 22 ist als Kontaktblech ausgebildet und weist einen geringen Materialquerschnitt auf. Die Kontaktfahne 21 weist im Wesentlichen eine Plättchenform auf. Des Weiteren ist ein gebogener Federabschnitt 23 zu erkennen. Die Kontaktfahne 21 ist über der Auflagefahne 31 ausgebildet. Insbesondere ist der gebogene Federabschnitt 23 der Kontaktfahne 21 derart über der Auflagefahne 31 ausgebildet, dass bei Betätigung der Kontaktfahne 21 der gebogene Federabschnitt 23 die Auflagefahne 31 berühren kann.

Die Auflagefahne 31 ist ebenfalls als plättchenartiges Element ausgebildet, wobei die Auflagefahne 31 im Wesentlichen senkrecht zum Grundkörper 32 des zweiten Kontaktelements 30 ausgebildet ist. Aufgrund der Materialauswahl, nämlich aufgrund der Verwendung eines Metalls zur Ausbildung des ersten Kontaktelements 20 sowie der zugehörigen Kontaktfahne 21 sowie der Ausbildung eines gebogenen Federabschnitts 23 kann die Kontaktfahne 21 zur Betätigung der Hupeinrichtung, d.h. zum Schließen des Hupstromkreises ohne großen Kraftaufwand in Richtung der Auflagefahne 31 bewegt werden. Die Auslenkung der Kontaktfahne 21 wird bei nachlassendem äußeren Krafteinfluss reduziert, so dass die Kontaktfahne 21 wieder ihren Ruhezustand einnehmen kann. Die Kontaktfahne 21 weist eine Rückstellkraft auf, so dass diese selbsttätig in eine von der Auflagefahne 31 beabstandete Position zurückstellbar ist.

Ebenfalls dargestellt sind Biegeabschnitte 28 des ersten Kontaktelements 20. Diese Biegeabschnitte 28 sind im Grundkörper 22 ausgebildet. Auch das zweite Kontaktelement 30 weist im Grundkörper 32 Biegeabschnitte 38 auf. Die Biegeabschnitte 28 und 38 sind derart komplementär zueinander ausgebildet und positioniert, dass zwischen den Kontaktelementen 20 und 30 Durchführungsöffnungen ausgebildet sind, die im Wesentlichen einen runden Querschnitt aufweisen. Diese dienen beispielsweise zur Fixierung von Abdeckungselementen bzw. Gasgeneratoren.

In Fig. 1c ist die genaue Ausführung eines Verankerungsstifts 40a, 40b dargestellt. Der Verankerungsstift 40a, 40b weist, wie dies insbesondere aufgrund der perspektivischen Ansicht in Fig. 1b erkennbar ist, einen länglichen Zentralabschnitt 41 auf. Seitlich des Zentralabschnitts 41 sind Verrastungselemente 42 ausgebildet. Durch den Zentralabschnitt 41 verläuft die Längsachse L des Verankerungsstifts 40a, 40b. Von der Längsachse L wird zusammen mit einer Senkrechten zur Längsachse, die die beiden Seitenflächen 48 schneidet, eine Längsebene aufgespannt. Es ist zu erkennen, dass die Verrastungselemente 42 jeweils winklig zu dieser Längsebene LE verlaufen.

Die ersten Verrastungselemente 43, die am nächsten zur Spitze 46 des Verankerungsstiftes 40a, 40b angeordnet sind, sind jeweils in gleicher Abweichung zur Längsebene LE schrägverlaufend ausgebildet. Die zweiten Verrastungselemente 44 sind wiederum in die entgegengesetzte Richtung zu den ersten Verrastungselementen 43 schrägverlaufend zur Längsebene LE angeordnet. Die dritten Verrastungselemente 45 verlaufen hingegen parallel und somit in gleicher Abweichungsrichtung zu den ersten Verrastungselementen 43. Die Verankerungsstifte 40a und 40b weisen eine widerhakenartige Struktur auf.

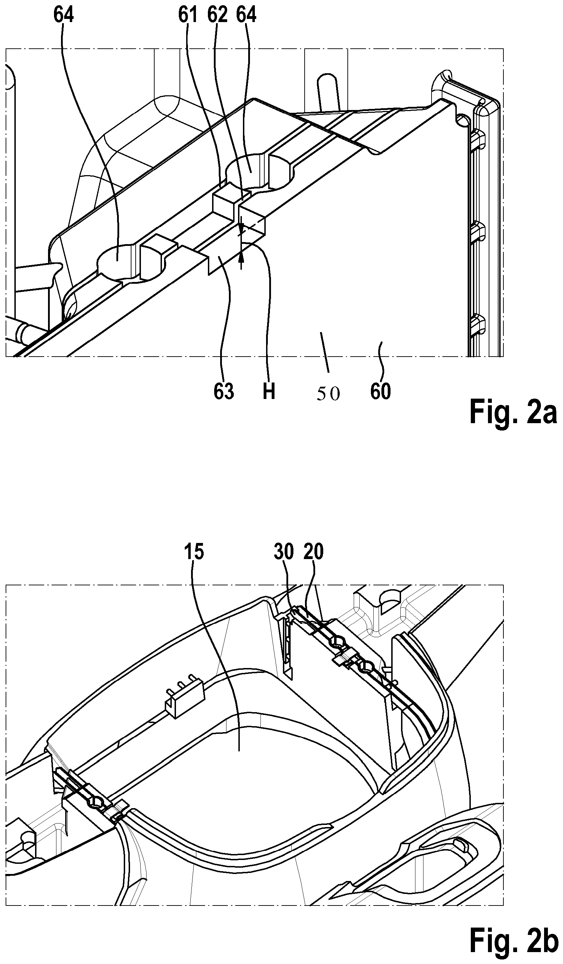

In Fig. 2a ist der Schaumkörper 60 eines Lenkrads 50 dargestellt. Es ist zu erkennen, dass der Schaumkörper 60 Ausnehmungen 61 und 62 aufweist. Die Ausnehmung 61 dient zur späteren Aufnahme des ersten Kontaktelements 20. Die Ausnehmung 62 dient zur Aufnahme des zweiten Kontaktelements 30. Bei den Ausnehmungen 61 und 62 handelt es sich um schlitzförmige Materialaussparungen.

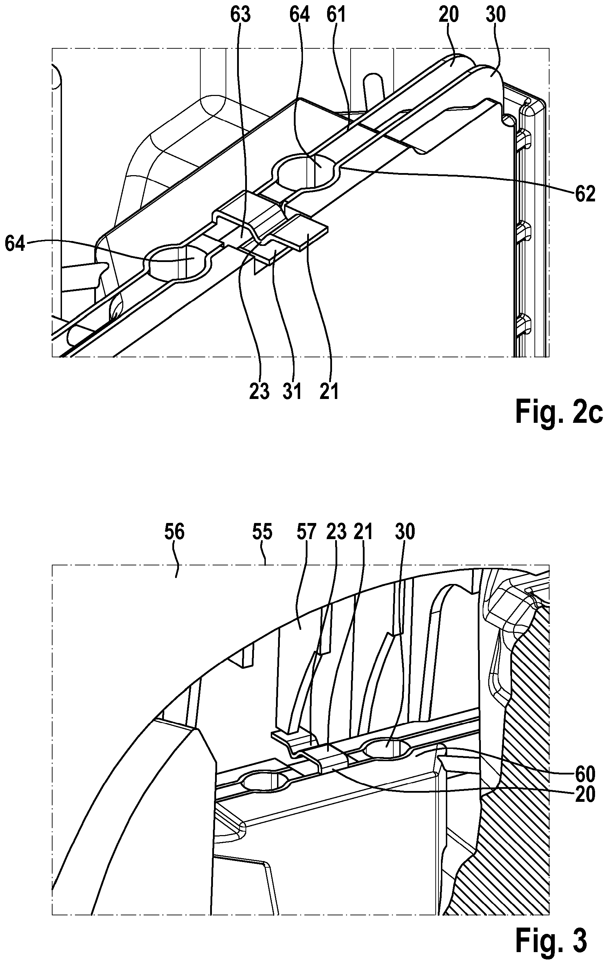

Des Weiteren sind Löcher 64 zu erkennen. In den Löchern 64 sind im montierten Zustand die Biegeabschnitte 28 und 38 der Kontaktelemente 20 und 30 positioniert. Ebenfalls ist ein Freiraum 63 dargestellt. In diesem Freiraum 63 ist im montierten Zustand die Auflagefahne 31 eines zweiten Kontaktelements 30 positioniert. Die Höhe H des Freiraums 63 ist derart ausgebildet, dass eine, vorzugsweise teilweise im Freiraum 63 positionierte, Kontaktfahne 21 in Richtung der Auflagefahne 31 bewegt werden kann (siehe hierzu Fig. 2c).

In Fig. 2b ist der Schaumkörper 60 mit einer darin positionierten Hupeinrichtung 10 dargestellt. Es ist zu erkennen, dass die Fahnen 21, 31 in 9-Uhr-Position sowie in 3-Uhr-Position des Lenkrads 60 ausgebildet sind. Die 6-Uhr-Position ist im dargestellten Beispiel nicht zu erkennen.

In Fig. 2c ist die Positionierung der Hupeinrichtung 10 in einer detaillierten Darstellung vergrößert gezeigt. Es ist zu erkennen, dass die Kontaktfahne 21 derart in Relation zum zweiten Kontaktelement 30, insbesondere zur Auflagefahne 31, angeordnet ist, dass der gebogene Federabschnitt 23 in Richtung der Auflagefahne 31 weist und im Freiraum 63 positioniert ist. Im dargestellten Beispiel steht die Kontaktfahne 21 seitlich über den Schaumkörper 60 über. Dies erleichtert die Betätigung der Kontaktfahne 21, wie dies in Fig. 3 dargestellt ist.

In Fig. 3 ist ein Gassackmodul 55 dargestellt. Dieses Gassackmodul 55 ist in die Öffnung 15 (siehe Fig. 2b) eingebracht. Insbesondere ist in Fig. 3 das Außengehäuse 56 zu erkennen. An dem Außengehäuse 56 ist ein Vorsprung 57 ausgebildet. Dieser Vorsprung 57 dient zur Betätigung der Kontaktfahne 21 des ersten Kontaktelements 20. Sofern das Gassackmodul 55 bei einer Betätigung der Hupenabdeckung nach unten gedrückt wird, wird der Vorsprung 57 auf die Kontaktfahne 21 gedrückt. Diese Kontaktfahne 21 kommt dann in Kontakt mit der Auflagefahne 31. Der Hupstromkreis wird durch diese Berührung geschlossen.

### Bezugszeichenliste

- 10: Hupeinrichtung
- 15: Öffnung
- 20: erstes Kontaktelement
- 21: Kontaktfahne
- 22: Grundkörper
- 23: gebogener Federabschnitt
- 25: Verbindungsschenkel
- 26: linker Seitenschenkel
- 27: rechter Seitenschenkel
- 28: Biegeabschnitt
- 30: zweites Kontaktelement
- 31: Auflagefahne
- 32: Grundkörper
- 35: Verbindungsschenkel
- 36: linker Seitenschenkel
- 37: rechter Seitenschenkel
- 38: Biegeabschnitt
- 40a, 40b: Verankerungsstift
- 41: länglicher Zentralabschnitt
- 42: Verrastungselement
- 43: erstes Verrastungselement
- 44: zweites Verrastungselement
- 45: drittes Verrastungselement
- 46: Spitze
- 48: Seitenfläche
- 50: Lenkrad
- 55: Gassackmodul
- 56: Außengehäuse
- 57: Vorsprung
- 60: Schaumkörper
- 61: Ausnehmung erstes Kontaktelement
- 62: Ausnehmung zweites Kontaktelement
- 63: Freiraum
- 64: Loch
- L: Längsachse Verankerungsstift
- LE: Längsebene
- H: Höhe Freiraum

## Patentansprüche

1. Lenkrad (50) mit
einem, insbesondere ringförmigen, Haltegriff,
einem Schaumkörper (60) der innerhalb des Haltegriffes einen mittleren Bereich des Lenkrades (50), welcher zur Aufnahme eines Gassackmoduls (55) ausgebildet ist, ring- oder ringsegmentförmig umgibt, sowie
einer Hupeinrichtung (10) für das Lenkrad (50), umfassend ein erstes Kontaktelement (20) und mindestens ein zweites Kontaktelement (30), die voneinander beabstandet angeordnet sind,
wobei die Hupeinrichtung (10) in dem Schaumkörper (60) fixiert ist,
wobei die Kontaktelemente (20, 30) jeweils als Kontaktblech ausgebildet sind und der Schaumkörper (60) als schlitzförmige Materialaussparungen ausgebildete Ausnehmungen (61, 62) zur späteren Aufnahme der Kontaktelemente (20, 30) aufweist,
wobei das erste Kontaktelement (20) mindestens eine Kontaktfahne (21) aufweist und das zweite Kontaktelement (30) mindestens eine Auflagefahne (31) aufweist, wobei die Kontaktfahne (21) und die Auflagefahne (31) derart komplementär zueinander ausgebildet und positioniert sind, dass die Kontaktfahne (21) zum Schließen eines Hupstromkreises die Auflagefahne (31) berührt.

2. Lenkrad nach Anspruch 1, **dadurch gekennzeichnet, dass** die Kontaktelemente (20, 30) jeweils einzeln und ohne Kontakt zu dem/den übrigen Kontaktelement(en) (30), im Schaumkörper des Lenkrades verankert bzw. verankerbar sind.

3. Lenkrad nach Anspruch 1 oder 2, **dadurch gekennzeichnet, dass** das erste Kontaktelement (20) und/oder das zweite Kontaktelement (30) jeweils mindestens einen Verankerungsstift (40a, 40b) aufweisen, wobei dieser, vorzugsweise, eine widerhakenartige Spitze und/oder eine harpunenartige Form und/oder eine widerhakenartige bzw. tannenbaumartige Struktur aufweist.

4. Lenkrad nach einem der vorangegangenen Ansprüche, **dadurch gekennzeichnet, dass** die Kontaktfahne (21) einen gebogenen Federabschnitt (23) aufweist und/oder, dass die Kontaktfahne (21) eine Rückstellkraft aufweist, derart, dass sich die Kontaktfahne (21) selbsttätig in eine von der Auflagefahne (31) beabstandete Position zurückstellt.

5. Lenkrad nach einem der vorangegangenen Ansprüche, **dadurch gekennzeichnet, dass** das erste Kontaktelement (20) und vorzugsweise auch das zweite Kontaktelement (30) im Bereich seiner Kontaktfahne (21) bzw. seiner Auflagefahne (31) zumindest eine Positioniereinrichtung (28, 30) aufweist, insbesondere in Form einer, vorzugsweise kreisringsegmentförmigen, Formabweichung des Kontaktelementes (20, 30), mittels der das Kontaktelement gegenüber dem Schaumkörper (60) des Lenkrades (50), insbesondere entlang seiner Längserstreckung, positionierbar ist, wobei vorzugsweise beiderseits der Kontaktfahne (21) bzw. Auflagefahne (31) jeweils eine Positioniereinrichtung (28, 30) ausgebildet ist.

6. Lenkrad nach einem der vorangegangenen Ansprüche, **dadurch gekennzeichnet, dass** das erste Kontaktelement (20) und das zweite Kontaktelement (30) jeweils im Wesentlichen eine U-Form aufweisen, wobei jeweils an allen drei Schenkeln (25, 26, 27, 35, 36, 37) der U-Form mindestens eine Kontaktfahne (21) oder eine Auflagefahne (31) ausgebildet ist.

7. Lenkrad (50) nach einem der vorangegangenen Ansprüche, **dadurch gekennzeichnet, dass** der Schaumkörper (60) zumindest zwei ring- oder ringsegmentförmige Ausnehmungen (61, 62) aufweist, in den die Kontaktelemente (20, 30) fixiert bzw. fixierbar sind, wobei, vorzugsweise, die Ausnehmungen (61, 62) als zwei zueinander parallel verlaufende Ausnehmungen (61, 62) in dem Schaumkörper ausgebildet sind.

8. Lenkrad (50) nach zumindest einem der vorangegangenen Ansprüche, **dadurch gekennzeichnet, dass** der Schaumkörper (60) zumindest eine weitere, insbesondere zwei weitere Ausnehmungen (64) in einem Bereich aufweist, in der das oder die Kontaktelemente (20, 30) einer Kontaktfahne (21) bzw. einer Auflagefahne (31) aufweisen, wobei die weitere(n) Ausnehmung(en) zur Aufnahme und Positionierung der zumindest einen Positioniereinrichtung (28, 30) vorgesehen und ausgebildet sind, und wobei, weiter vorzugsweise, die weitere(n) Ausnehmung(en) (64) als kreissegmentförmige Verbreiterung der Ausnehmung (61, 62) ausgebildet ist.

9. Lenkrad (50) nach zumindest einem der vorangegangenen Ansprüche, **dadurch gekennzeichnet, dass** Verankerungsstifte (40a, 40b) der Hupeinrichtung (10) fest in dem Schaumkörper (60) eingebettet sind, und/oder dass zum Schließen eines Hupstromkreises, insbesondere zur Bewegung einer hierzu dienenden Kontaktfahne (21), eine Betätigungseinrichtung ausgebildet ist, die insbesondere wenigstens einen in Richtung der Auflagefahne (31) vorstehenden Vorsprung (56) aufweist, wobei vorzugsweise ein Gassackmodul (55) als Betätigungseinrichtung ausgebildet ist, an dem der Vorsprung (57) ausgebildet ist, der vorzugsweise an einem Außengehäuseabschnitt (56) des Gassackmoduls (55) ausgebildet ist.

10. Lenkrad (50) nach zumindest einem der vorangegangenen Ansprüche, **dadurch gekennzeichnet, dass** die Ausnehmungen (61, 62) in einem Abschnitt des Schaumkörpers (60), in dem eine Auflagefahne (31) positioniert ist, einen Freiraum (63) bilden, derart, dass die Kontaktfahne (21) in einem unbetätigten Zustand der Hupeinrichtung (10) von der Auflagefahne (31) beabstandet positioniert ist.

11. Verfahren zur Herstellung eines Lenkrads (50) nach einem der vorangegangenen Ansprüche, umfassend die folgenden Schritte:
a) Bereitstellen eines Lenkradskeletts;
b) Umschäumen des Lenkradskeletts zur Bildung des Schaumkörpers (60) sowie gleichzeitiges oder nachträgliches Einbringen von Ausnehmungen (61, 62, 64) in den Schaumkörper (60), wobei zwei Ausnehmungen (61, 62) als schlitzförmige Materialaussparungen ausgebildet sind;
c) Bereitstellen der Hupeinrichtung (10);
d) Positionieren der Hupeinrichtung (10) in den Ausnehmungen (61, 62).

12. Verfahren nach Anspruch 11, **dadurch gekennzeichnet, dass** im Schritt d) Verankerungsstifte (40a, 40b) der Hupeinrichtung (10) in den Schaumkörper (60) eingedrückt werden.

## Claims

1. Steering wheel (50) comprising
an, especially annular, handle,
a foamed body (60), which surrounds a central area of the steering wheel (50) configured for receiving an airbag module (55) in a ring or ring segment shape within the handle, and
a horn device (10) for the steering wheel (50) including a first contact element (20) and at least a second contact element (30), which are arranged at a distance from each other,
wherein the horn device (10) is fixed in the foamed body (60),
wherein the contact elements (20, 30) are each in the form of a contact sheet and the foamed body (60) has recesses (61, 62) formed as slotted material recesses for later receiving the contact elements (20, 30),
wherein the first contact element (20) includes at least one contact tab (21) and the second contact element (30) includes at least one support tab (31), the contact tab (21) and the support tab (31) being formed and positioned to be complementary to each other such that for closing a horn circuit the contact tab (21) contacts the support tab (31).

2. The steering wheel according to claim 1, **characterized in that** the contact elements (20, 30) are or can be anchored in the foamed body of the steering wheel each individually and without contacting the other contact element(s) (30).

3. The steering wheel according to claim 1 or 2, **characterized in that** the first contact element (20) and/or the second contact element (30) includes at least one anchoring pin (40a, 40b), wherein the latter preferably has a barb-type point and/or takes a harpoon-type shape and/or has a barb-type or pine-tree structure.

4. The steering wheel according to any one of the preceding claims, **characterized in that** the contact tab (21) includes a bent spring portion (23) and/or the contact tab (21) has a reset force such that the contact tab (21) is automatically reset to a position spaced apart from the support tab (31).

5. The steering wheel according to any one of the preceding claims, **characterized in that** the first contact element (20) and preferably also the second contact element (30) in the area of its contact tab (21) and, resp., of its support tab (31) has/have at least one positioning unit (28, 30), especially configured as preferably circle segment-shaped form deviation of the contact element (20, 30) by means of which the contact element can be positioned opposite to the foamed body (60) of the steering wheel (50), especially along its longitudinal extension, wherein a respective positioning unit (28, 30) is configured preferably on both sides of the contact tab (21) and, resp., of the support tab (31).

6. The steering wheel according to any one of the preceding claims, **characterized in that** each of the first contact element (20) and the second contact element (30) is substantially U-shaped, wherein at least one contact tab (21) or one support tab (31) is formed at each of the three legs (25, 26, 27, 35, 36, 37) of the U shape.

7. The steering wheel (50) according to any of the preceding claims, **characterized in that** the foamed body (60) includes at least two ring-shaped or ring segment-shaped recesses (61, 62) in which the contact elements (20, 30) are or can be fixed, wherein the recesses (61, 62) are preferably formed in the foamed body (60) as two recesses (61, 62) extending in parallel to each other.

8. The steering wheel (50) according to any of the preceding claims, **characterized in that** the foamed body (60) includes at least one further, especially two further recesses (64) in an area in which the contact element or elements (20, 30) include(s) a contact tab (21) and, resp., a support tab (31), wherein the further recess(es) is/are provided and formed to receive and position the at least one positioning unit (28, 30) and wherein, further preferred, the further recess(es) (64) is/are in the form of a circle segment-shaped broadening of the recess (61, 62).

9. The steering wheel (50) according to any of the preceding claims, **characterized in that** anchoring pins (40a, 40b) of the horn device (10) are tightly embedded in the foamed body (60), and/or **in that** for closing a horn circuit, especially for moving a contact tab (21) serving for this purpose, an actuating unit which especially includes at least one projection (56) protruding in the direction of the support tab (31) is configured, wherein preferably an airbag module (55) is in the form of an actuating unit at which the projection (57) is formed which is preferably configured at an outer housing portion (56) of the airbag module (55).

10. The steering wheel (50) according to any of the preceding claims, **characterized in that** the recesses (61, 62) form a clearance (63) in a portion of the foamed body (60) in which a support tab (31) is positioned such that in a non-actuated state of the horn device (10) the contact tab (21) is positioned at a distance from the support tab (31).

11. A method for manufacturing a steering wheel (50) according to any one of the preceding claims, comprising the following steps of:
a) providing a steering wheel skeleton;
b) foam-wrapping the steering wheel skeleton for forming the foamed body (60) as well as simultaneous or subsequent introduction of recesses (61, 62, 64) into the foamed body (60), wherein two recesses (61, 62) are formed as slotted material recesses;
c) providing the horn device (10);
d) positioning the horn device (10) in the recesses (61, 62).

12. The method according to claim 11, **characterized in that** in step d) anchoring pins (40a, 40b) of the horn device (10) are pressed into the foamed body (60).

## Revendications

1. Volant de direction (50) avec
une poignée de maintien, en particulier de forme annulaire,
un corps en mousse (60) qui entoure en forme d'anneau ou de segment d'anneau, à l'intérieur de la poignée de maintien, une zone centrale du volant de direction (50) qui est conçue pour recevoir un module airbag (55), ainsi que
un dispositif d'avertisseur sonore (10) pour le volant de direction (50), comprenant un premier élément de contact (20) et au moins un deuxième élément de contact (30), qui sont disposés à distance l'un de l'autre,
pour lequel le dispositif d'avertisseur sonore (10) est fixé dans le corps en mousse (60), pour lequel les éléments de contact (20, 30) sont chacun réalisés sous forme de tôle de contact et le corps en mousse (60) présente des évidements (61, 62) réalisés sous forme d'évidements de matériau en forme de fente pour recevoir ultérieurement les éléments de contact (20, 30),
pour lequel le premier élément de contact (20) présente au moins une patte de contact (21) et le deuxième élément de contact (30) présentant au moins une patte d'appui (31), pour lequel la patte de contact (21) et la patte d'appui (31) sont configurées et positionnées de manière complémentaire l'une par rapport à l'autre, de telle sorte que la patte de contact (21) touche la patte d'appui (31) pour fermer un circuit d'avertisseur sonore.

2. Volant de direction selon la revendication 1, **caractérisé en ce que** les éléments de contact (20, 30) sont ancrés ou peuvent être ancrés chacun individuellement et sans contact avec le ou les autres éléments de contact (30), dans le corps en mousse du volant de direction.

3. Volant de direction selon la revendication 1 ou 2, **caractérisé en ce que** le premier élément de contact (20) et/ou le deuxième élément de contact (30) présentent chacun au moins une broche d'ancrage (40a, 40b), pour lequel celle-ci présente, de préférence, une pointe en forme de crochet et/ou une pointe en forme de harpon et/ou une structure en forme de crochet ou de sapin.

4. Volant selon l'une des revendications précédentes, **caractérisé en ce que** la patte de contact (21) présente une partie élastique (23) courbée et/ou **en ce que** la patte de contact (21) présente une force de rappel de telle sorte que la patte de contact (21) se repositionne automatiquement dans une position espacée de la patte d'appui (31).

5. Volant de direction selon l'une des revendications précédentes, **caractérisé en ce que** le premier élément de contact (20) et de préférence également le deuxième élément de contact (30) présentent, dans la zone de sa patte de contact (21) ou de sa patte d'appui (31) au moins un dispositif de positionnement (28, 30), en particulier sous la forme d'un écart de forme, de préférence en forme de segment d'anneau circulaire, de l'élément de contact (20, 30), au moyen duquel l'élément de contact peut être positionné par rapport au corps en mousse (60) du volant de direction (50), en particulier le long de son extension longitudinale, pour lequel un dispositif de positionnement (28, 30) est de préférence formé de chaque côté de la languette de contact (21) ou de la languette d'appui (31).

6. Volant de direction selon l'une des revendications précédentes, **caractérisé en ce que** le premier élément de contact (20) et le deuxième élément de contact (30) présentent chacun essentiellement une forme en U, pour lequel au moins une patte de contact (21) ou une patte d'appui (31) est respectivement formée sur les trois branches (25, 26, 27, 35, 36, 37) de la forme en U.

7. Volant de direction (50) selon l'une des revendications précédentes, **caractérisé en ce que** le corps en mousse (60) présente au moins deux évidements (61, 62) en forme d'anneau ou de segment d'anneau, dans lesquels les éléments de contact (20, 30) sont fixés ou peuvent être fixés, pour lequel les évidements (61, 62) sont de préférence réalisés sous forme de deux évidements (61, 62) parallèles entre eux dans le corps en mousse.

8. Volant de direction (50) selon au moins l'une des revendications précédentes, **caractérisé en ce que** le corps en mousse (60) présente au moins un autre, en particulier deux autres évidements (64) dans une zone, dans laquelle le ou les éléments de contact (20, 30) présentent une patte de contact (21) ou une patte d'appui (31), pour lequel le(s) autre(s) évidement(s) sont prévu(s) et conçu(s) pour recevoir et positionner le au moins un dispositif de positionnement (28, 30), et pour lequel, de préférence encore, le(s) autre(s) évidement(s) (64) sont conçu(s) comme un élargissement en forme de segment de cercle de l'évidement (61, 62).

9. Volant de direction (50) selon au moins l'une des revendications précédentes, **caractérisé en ce que** des broches d'ancrage (40a, 40b) du dispositif d'avertisseur sonore (10) sont solidement encastrées dans le corps en mousse (60), et/ou **en ce que**, pour fermer un circuit d'avertisseur sonore, en particulier pour déplacer une patte de contact (21) servant à cet effet, un dispositif d'actionnement est réalisé, qui présente en particulier au moins une protrusion (56) faisant saillie en direction de la patte d'appui (31), pour lequel un module airbag (55) est de préférence réalisé comme dispositif d'actionnement, sur lequel est réalisée la protrusion (57) qui est de préférence réalisée sur une section de boîtier extérieur (56) du module airbag (55).

10. Volant de direction (50) selon au moins l'une des revendications précédentes, **caractérisé en ce que** les évidements (61, 62) forment un espace libre (63) dans une portion du corps en mousse (60) dans laquelle est positionnée une patte d'appui (31), de telle sorte que la patte de contact (21) est positionnée à distance de la patte d'appui (31) dans un état non actionné du dispositif d'avertisseur sonore (10).

11. Procédé de fabrication d'un volant de direction (50) selon l'une quelconque des revendications précédentes, comprenant les étapes suivantes :
a) Fournir d'une armature de volant de direction ;
b) Garnir de mousse l'armature du volant pour former le corps en mousse (60) ainsi que réalisation simultanée ou ultérieure d'évidements (61, 62, 64) dans le corps en mousse (60), deux évidements (61, 62) sont réalisés sous forme d'évidements de matériau en forme de fente ;
c) mettre à disposition le dispositif d'avertisseur sonore (10) ;
d) positionner le dispositif d'avertisseur sonore (10) dans les évidements (61, 62)

12. Procédé selon la revendication 11, **caractérisé en ce qu'**à l'étape d), des broches d'ancrage (40a, 40b) du dispositif d'avertisseur sonore (10) sont enfoncées dans le corps en mousse (60).
